# EUROPEAN PATENT SPECIFICATION

(11) **EP 4 358 744 B1**
(45) Date of publication and mention of the grant of the patent: **30.07.2025**
(21) Application number: 22734370.4
(22) Date of filing: 16.06.2022
(51) Int. Cl.: A23N 4/22, B26D 3/26

(54) **AVOCADO CUTTING AND PITTING PROCESS AND MULTI-LANE MACHINE**
AVOCADOSCHNEID- UND ENTKERNVERFAHREN UND MEHRSPURIGE MASCHINE
PROCÉDÉ DE COUPE ET DE DÉNOYAUTAGE D'AVOCATS ET MACHINE À VOIES MULTIPLES

(30) Priority: 24.06.2021 IT 202100016616
(43) Date of publication of application: 01.05.2024
(73) Proprietor: CTI Foodtech S.r.l., 84131 Salerno (SA) (IT); Crescenzo, Biagio, 84125 Salerno (SA) (IT)
(72) Inventor: CRISPI, Giovanni, 84126 Salerno (SA) (IT); CRESCENZO, Biagio, 84125 Salerno (IT)
(74) Representative: Studio Torta S.p.A.
(86) International application number: PCT/IB2022/055609
(87) International publication number: WO 2022/269427

(56) References cited:
- WO-A1-2020/026127
- US-A- 3 878 309
- US-A- 4 627 339

## Description

### Technical Field

The present invention relates to an avocado cutting and pitting process. It also relates to a related multi-lane machine.

### Background Art

The avocado (*Persea americana*) is a pear-shaped drupe, 7 to 20 centimeters long and with a weight that can vary from 100 to 1000 g, with a central seed, commonly called pit, of 3-5 cm in diameter. Its epicarp or peel can be green or aubergine, smooth or wrinkled, depending on the varieties and their origins.

The nature of the fruit, but above all its variations in size and weight, required manual processing in the past to separate the pit from the pulp which is certainly the most used part of the fruit.

The Applicant has submitted the international patent application PCT/ IB2019/056468 which concerns an industrial treatment to reduce the use of labor in the separation of the pit from the pulp. It provides an avocado cutting process, including feeding, orienting and advancing along multiple fruit lanes, a pre-cutting stage to create an incision both in a top portion and in a bottom portion of each fruit while the fruit is held neatly oriented, and a cutting stage in which a central vertical cut of each fruit is made, lateral to the pit so that the fruit is divided into two halves. During the cutting stage, the pit is beaten to be slightly moved inside the avocado and detached from the pulp.

PCT/IB2019/056468 also supplies a multi-lane machine comprising a shuffle feeder, a longitudinal frame, a conveyor with fruit-holding flights advancing along the longitudinal frame. The fruit-holding flights are shaped with a series of recesses sized according to the caliber of the fruits to be transported and transversely spaced, and provided with an opening at the bottom. The machine also comprises a cutting station with a pre-cutting section and a cutting section.

The pre-cutting section has a plurality of upper and lower pre-cutting blades mutually fixed facing each other on upper and lower transverse heads respectively. These heads are movable vertically with respect to the fruit-holding flights, on vertical guides perpendicular to the longitudinal frame above the conveyor. The upper heads have a plurality of hollow retaining elements, to hold the avocados in position, hollow retaining elements which are spring loaded on a pair of vertical rods movable across the upper head and are intended to rest, stressed by the springs, on respective avocados, neatly oriented in the recesses of the fruit-holding flights.

For each fruit-holding flight the cutting section has a plurality of pairs of separate cutting blades that are fixed only on the upper transverse head above the respective recess for lateral cutting of the fruits. The cutting section has a plurality of punches in the form of rods, each punch being movable between the separate cutting blades with respect to the upper head to hit the pit, to move it inside the avocado in order to detach it from the pulp.

The presence of the cutting station and the pre-cutting station in the machine described in PCT/IB2019/056468 determines a greater constructive complexity. Furthermore, since the blades are inserted into the fruit and pass through it from top to bottom, the cut is imprecise and irregular due to the compression action that this cutting system produces on the fibers of the fruit; moreover, the cut is very conditioned by the size of the fruit.

US 3,113,601 describes a pit fruit pitting device comprising a pair of blades arranged abutting side by side and having cutting edges facing in the same direction and forming together an inlet wedge to penetrate simultaneously into the fruit, a pair of gripping elements of the pit on said blades for engaging with the pit in a locking grip, means for executing a closing movement of the blades and then a movement for obtaining separation of the blades.

### Summary of Invention

The present invention aims to solve the problems present in the multi-lane machine described in the international patent application PCT/IB2019/056468.

In particular, an object of the invention is to allow a cutting operation of an avocado that obtains, without damaging the surface of the same, almost simultaneously, a precise separation of the fruit into two parts and the detachment of the surface of the pit from the pulp of the fruit adhering to it for its subsequent easy removal from the fruit cut in two halves.

A further purpose of the invention is to cause minimal deformation of the fruit pulp due to compression during cutting.

Another purpose of the invention is to perform a cutting operation that does not require its precise orientation in the vertical arrangement of the avocado.

In first aspect of the invention, the purposes are achieved by an avocado cutting and pitting process, including stages of feeding, orienting and advancing along several lines of avocado on fruit-holding flights equipped with recesses with diametrical slots, a cutting stage in which each avocado is divided into two halves by means of a pair of knives with facing blades, and a pitting stage in which the avocado pit is beaten by means of a plunger to be slightly moved inside the avocado and detached from the pulp,
wherein the cutting and pitting stages include:
- a vertical approach step of the pairs of knives to the fruit-holding flights so that the blades of each pair are inserted in opposite sides of the avocado and in said diametrical slots of the recesses in which the avocados are placed,
- a horizontal translation step of the pairs of knives so that the blades approach each other around the same pit,
- a horizontal translation step of the pairs of knives so that the blades move away from each other with respect to the pit,
- a lowering step of the plungers for beating the pits,
- a lifting step of the plungers with respect to the pits, and
- a vertical removal step of the pairs of knives with respect to the avocados cut and pitted on the fruit-holding flights.

In a second aspect thereof, the present invention provides a multi-lane machine comprising:
- a longitudinal frame,
- a conveyor having fruit-holding flights that are connected, at each end thereof, to links of a chain advancing along the longitudinal frame, the fruit-holding flights being equipped with a series of recesses that are opened at the bottom and transversely spaced, sized according to the caliber of the avocados to be transported,
- a cutting and pitting station, comprising
- a transversal head movable vertically with respect to the fruit-holding flights above them, on first vertical guides perpendicular to the longitudinal frame above the conveyor, the transverse head having a lower side;
- a plurality of pairs of knives for each fruit-holding flight, in the transverse head above the respective recesses for cutting avocados,
- a cover element,
- a plurality of plungers in the form of rods fixed to a movable crosspiece by means of a connecting rod-crank mechanism driven by a brushless motor mounted on the cover element, to strike the pit and to move it inside the avocado in order to detach it from the pulp,
wherein the cutting and pitting station also includes:
- transversal sliding coupling guides, located in the lower side of the transversal head;
- a left knife holder slide and a right knife holder slide, equipped at the top with sliding means cooperating with said transversal sliding coupling guides;
- left knives and right knives forming a plurality of pairs of knives suitable for simultaneously cutting a plurality of avocados on each fruit-holding flight; and
- drive means able to simultaneously move the left knife holder slide and the right knife holder slide to allow a coplanar translational movement of approaching and moving away of the left knife and the right knife of each pair of knives with respect to said pit.

### Brief Description of Drawings

Further features and advantages of the invention will become most evident from a detailed but not limiting description of an embodiment of an avocado cutting and pitting multi-lane machine, illustrated in the attached drawings, in which:
**Fig.1**

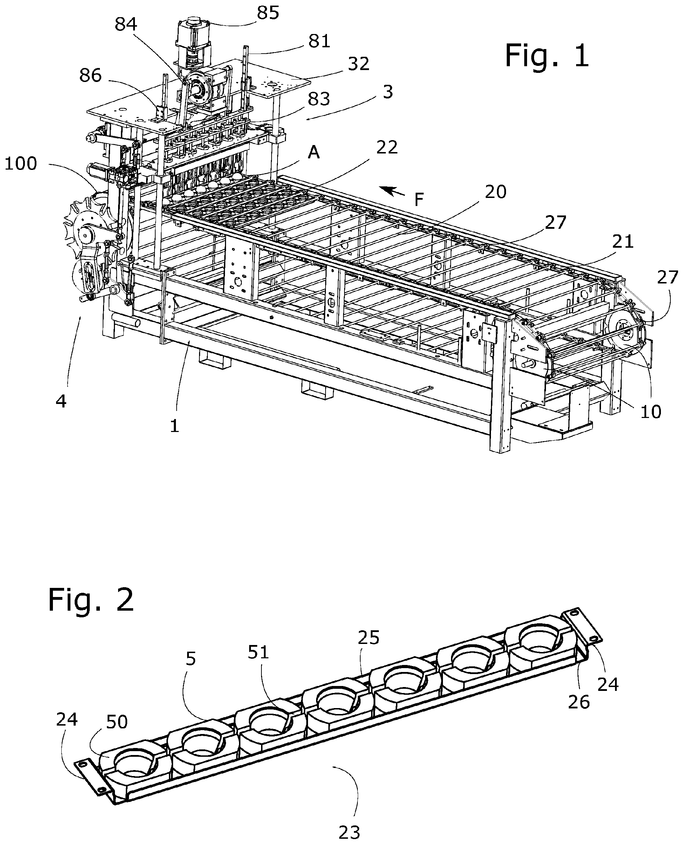

   [Fig.1] is a partial schematic perspective view of a multi-lane machine for cutting avocados according to the present invention;
**Fig.2**
   [Fig.2] is a perspective view of a fruit-holding flight of the machine of [Fig.1];
**Fig.3**

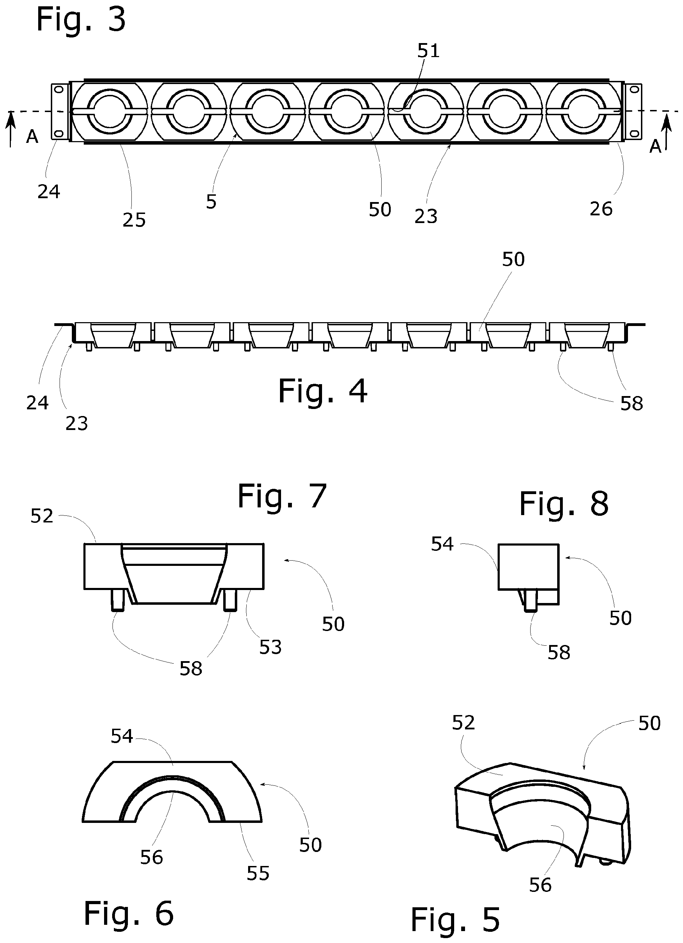

   [Fig.3] is a top plan view of the fruit-holding flight of [Fig.2];
**Fig.4**
   [Fig.4] is a cross section view of the fruit-holding flight obtained along the line A-A of [Fig.3];
**Fig.5**
   [Fig.5] is a perspective view of a half cup for a recess in the fruit-holding flight of [Fig.2];
**Fig.6**
   [Fig.6] is a top view of the half cup of [Fig.5];
[Fig.7]
   [Fig.7] is a front view of the half cup of [Fig.5];
**Fig.8**
   [Fig.8] is a side view of the half cup of [Fig.5];
**Fig.9**

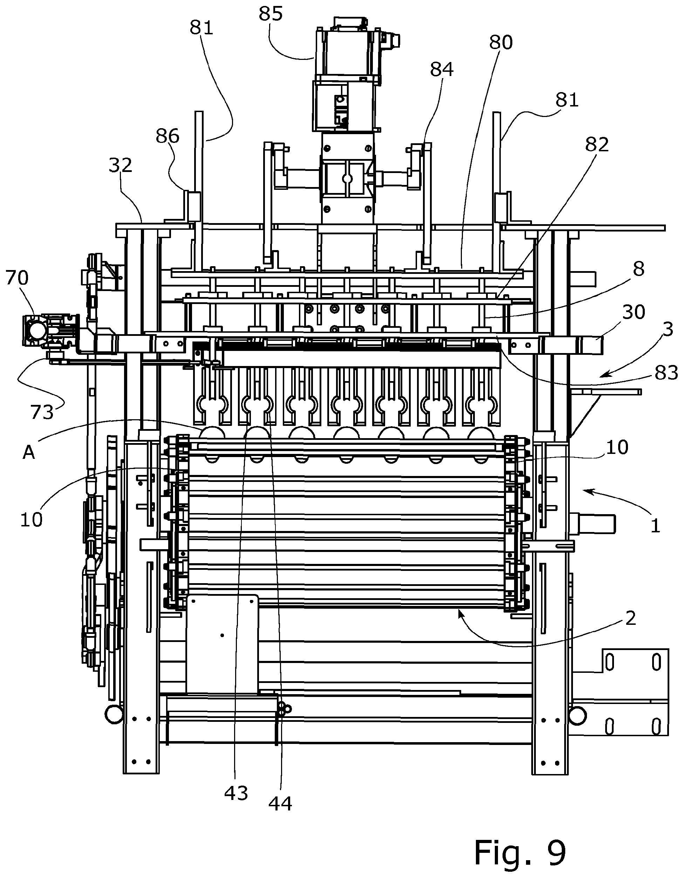

   [Fig.9] is a front end view of the multi-lane machine of [Fig.1];
**Fig.10**

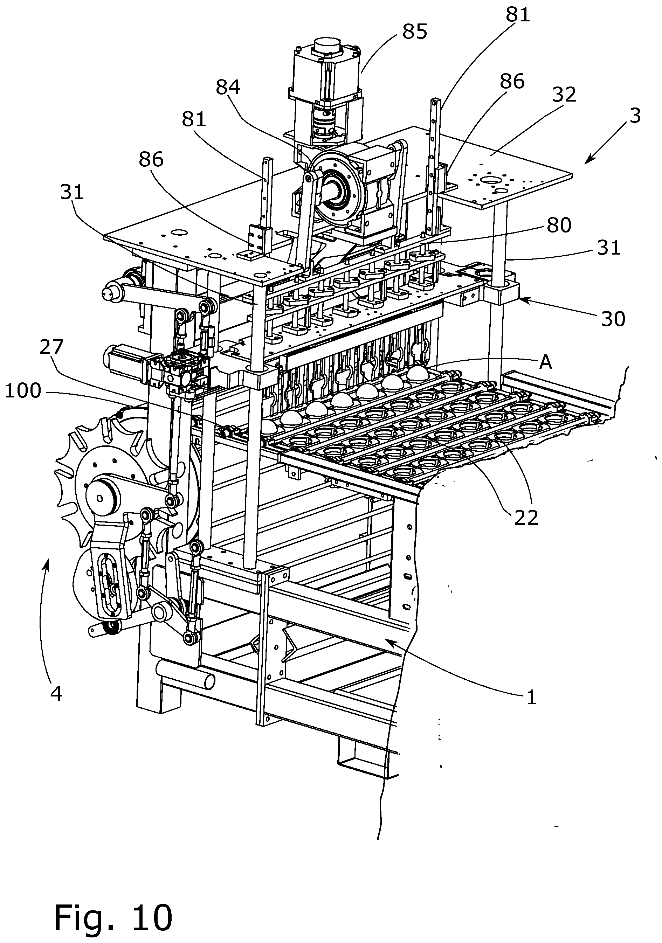

   [Fig.10] is an enlarged partial perspective view of the cutting station of the multi-lane machine of [Fig.1];
**Fig.11**

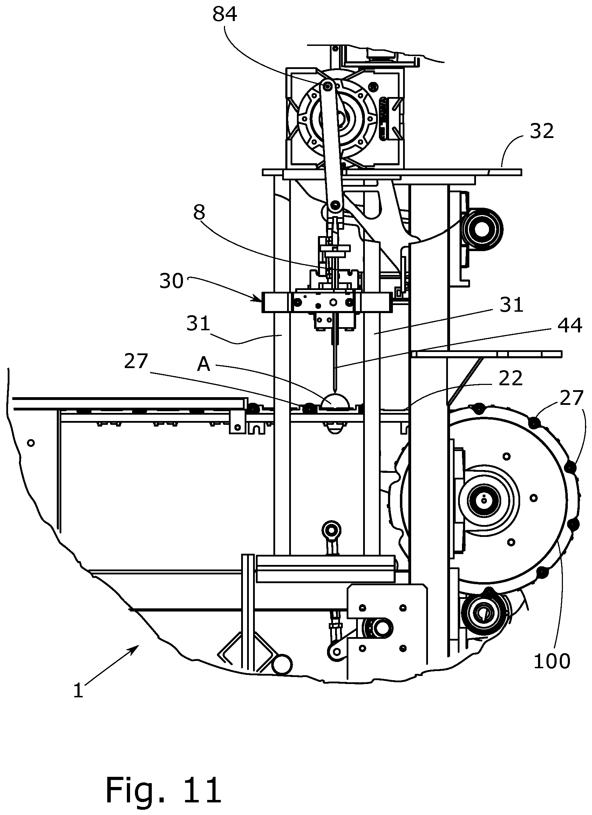

   [Fig.11] is an enlarged right partial side view of the cutting station of [Fig.10];
**Fig.12**

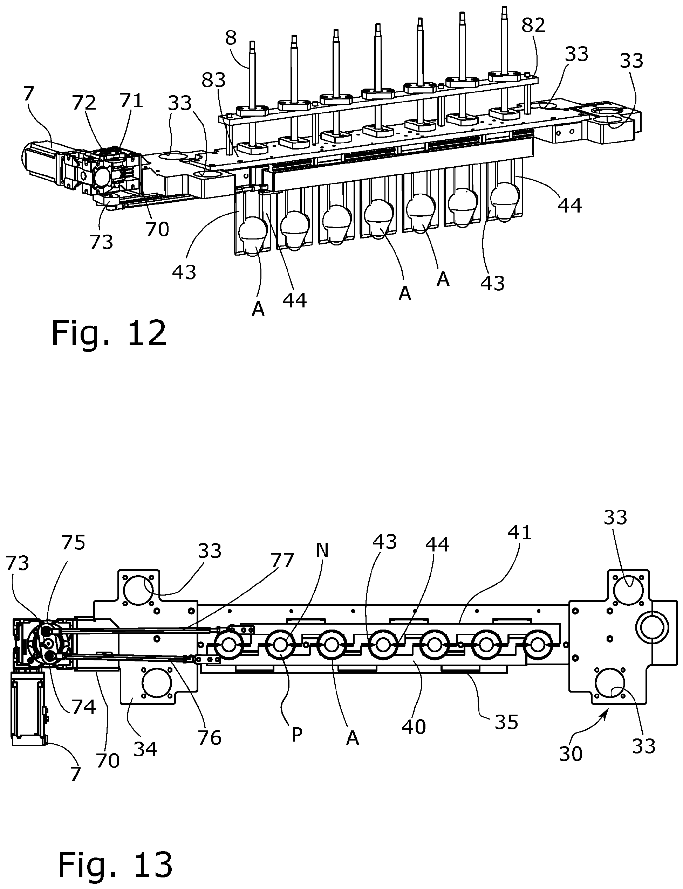

   [Fig.12] is an enlarged partial schematic perspective view of a transversal head of the cutting station of [Fig.10];
**Fig. 13**
   [Fig.13] is a bottom plan view of the transverse head of [Fig.12];
**Fig. 14**

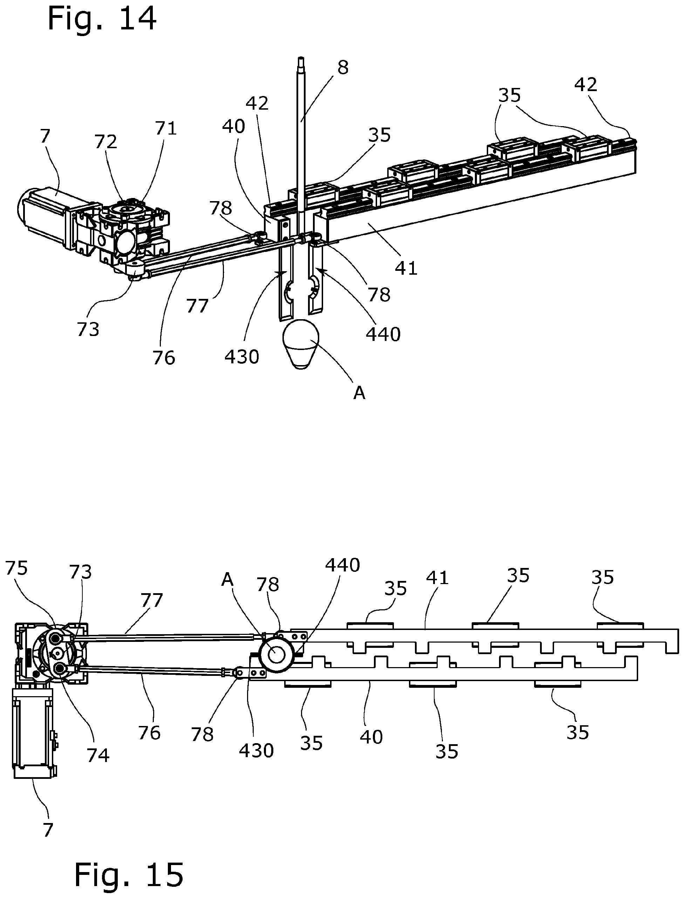

   [Fig.14] is a partial schematic perspective view from above of [Fig.12] showing a single pair of knives, but without the transverse head;
**Fig. 15**
   [Fig.15] is a bottom plan view of [Fig.14];
**Figs. 16 to 22**

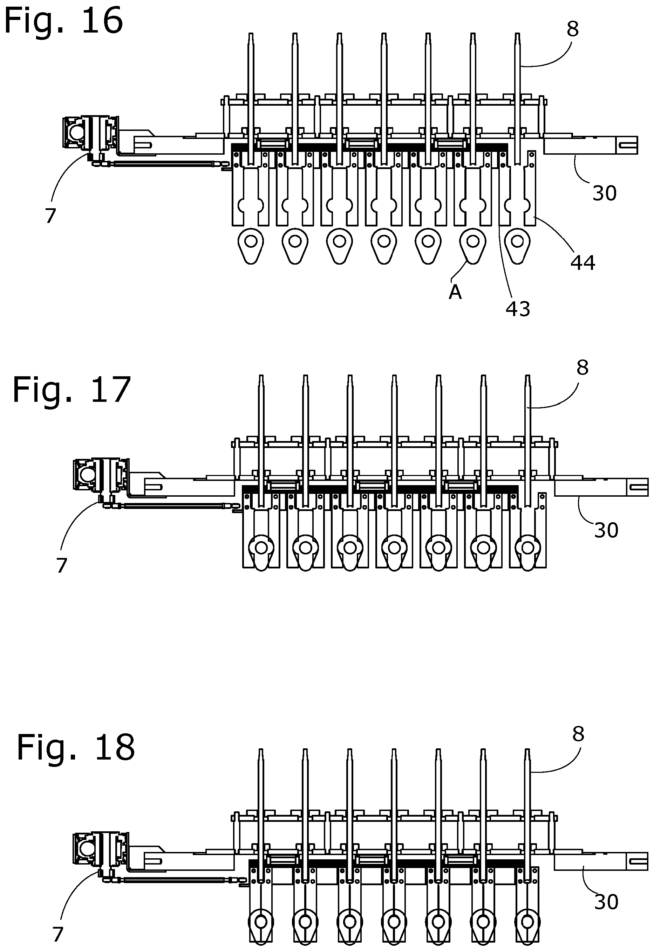

   [Figs. 16 to 22] are schematic partially sectioned side views of the transverse head of [Fig.12], showing successive steps of cutting avocado;
**Fig. 23**

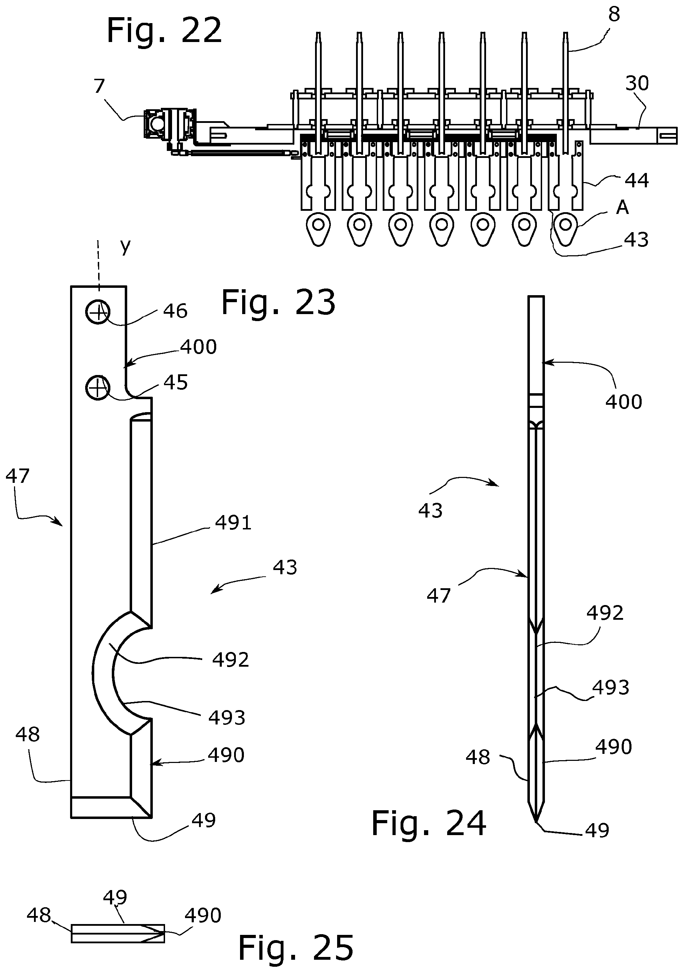

   [Fig.23] is a front view of a first embodiment of a left knife in the transverse head, shown in Figs. 9, 10 and 11, the right knife being specularly identical;
**Fig. 24**
   [Fig.24] is an internal side view of the left knife of [Fig.23];
**Fig. 25**
   [Fig.25] is a free end view of the left knife of [Fig.23];
**Fig. 26**

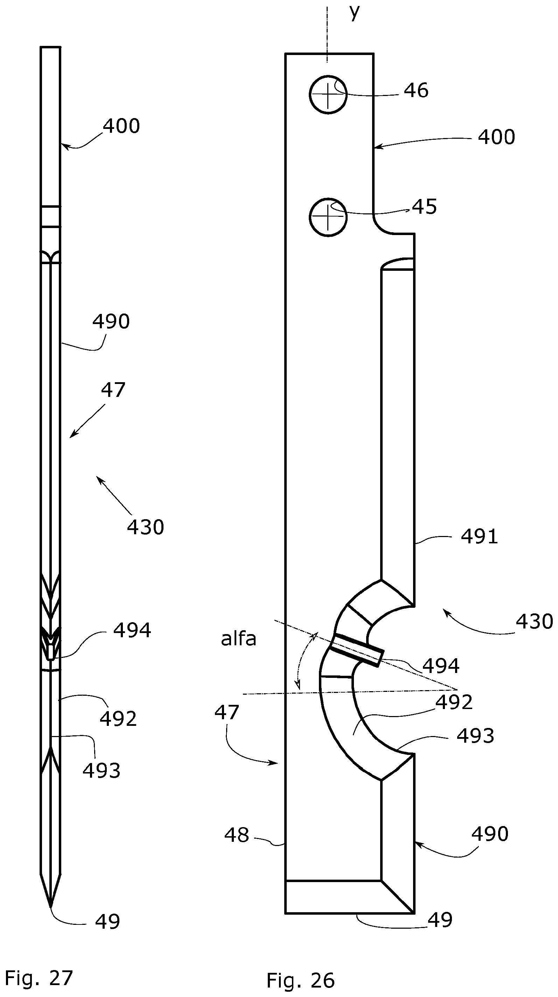

   [Fig.26] is a front view of a variant of the left knife in the transverse head of [Fig.14];
**Fig. 27**
   [Fig.27] is an internal side view of the left knife of [Fig.26];
**Fig. 28**

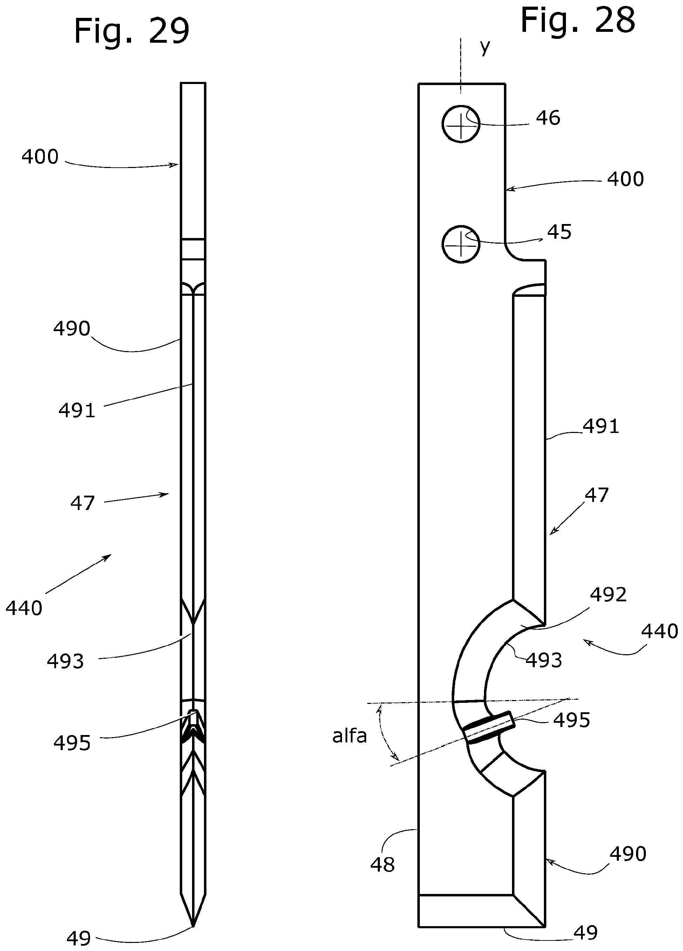

   [Fig.28] is a front view of a variant of a right knife in the transverse head of [Fig.14]; and
**Fig. 29**
   [Fig.29] is an internal side view of the right knife of [Fig.28].

### Description of the invention

Reference is initially made to [Fig.1] which is a partial schematic perspective view of an avocado cutting and pitting multi-lane machine according to the present invention. The multi-lane machine comprises a longitudinal frame 1, a conveyor 2 with fruit-holding flights, and a cutting station 3. The conveyor 2 is constituted, according to the conventional technique, by a plurality of transverse rods 20. The transverse rods 20 are equidistant longitudinally by a step chosen according to the movement of a stepping device 4, which is known and therefore not described here. The avocados, not shown, are fed onto the conveyor 2 from a feeding station, also not shown, on the right side of [Fig.1], and moved towards the left, according to the arrow F, into the cutting station 3. The transverse rods 20 are connected to each other near the opposite ends in succession by means of links, generally indicated with 21 and supported by rollers 27, of known type. The rollers 27 engage with pairs of wheels 10, 10 and 100, 100, respectively in the front and rear ends of the conveyor 2, on which the belt formed by fruit-holding flights 22 runs, connected in succession by means of the links 21.

The fruit-holding flights 22 are described in detail hereinafter with reference to Figs. 2 to 8. The perspective view of [Fig.2] shows a fruit-holding flight of the machine in [Fig.1] according to the present invention, while [Fig.3] and [Fig.4] are a top plan view and a cross section view according to the line A-A of [Fig.3] of the fruit-holding flight. The fruit-holding flight 22 comprises a tray 23, preferably metallic, provided with end flaps 24, suitable for being fixed on the links 21 ([Fig.1]). The tray 23 has lateral edges 25 which extend at right angles to the tray bottom 26 and limit a series of recesses, generally indicated as 5, sized according to the fruit to be transported and transversely spaced. According to the present invention, the recesses 5 are made with two half cups, 50, identical to each other but arranged facing spaced apart by a diametrical gap 51. A half cup 50 is represented in [Fig.5] in a perspective view, in [Fig.6] in top plan view, in [Fig.7] in front view and in [Fig.8] in side view.

Each half cup 50 has an upper side 52 and a lower side 53, an external lateral profile 54 in contact with the lateral edges 25, and an internal lateral profile 55 comprising a semi-frustoconical shape 56, tapered towards the lower side 53. The semi-frustoconical shape 56 extends beyond the lower side 53 of the half cup 50. The lower side 53 also has two pins 58, protruding perpendicularly from the lower side 53, which are pressed into respective holes ([Fig.4]) made in the tray bottom 26. The recesses 5 are held in this way by friction. Instead of the push pins 58, bolts or other fastening means, which are not shown, can be provided. The function of the particular conformation of the fruit-holding flight 22 according to the present invention will be most clear in the following description. It is already understood, however, that the two facing semi-frustoconical shapes 56 form a frustoconical cavity intended to receive an avocado which is transported from the fruit-holding flight to the cutting station 3.

Reference is made now to [Fig.9] which is a front end view of the multi-lane machine in [Fig.1]. The cutting station 3 is shown with fruits, indicated generically as A waiting to be cut and pitted. The cutting station 3 is also shown in [Fig.10] in partial perspective view and in [Fig.11] in side view.

The cutting station 3 is also shown in [Fig.10] in partial perspective view and in [Fig.11] in side view.

The cutting station 3 comprises a transversal head 30, which is movable vertically above the fruit-holding flights 22, on first vertical guides, generally indicated with 31, perpendicular to the longitudinal frame 1 above the conveyor 2. The vertical guides 31 are cylindrical pillars which support a cover element 32 of the cutting station 3. For the sliding of the transverse head 30 on the vertical guides 31, the transverse head 30 has through holes generally indicated as 33, as shown in greater detail in Figs. 12 and 13, which are respectively an enlarged partial schematic perspective view of a transverse head of the cutting station of [Fig.10], and a bottom plan view of the transverse head of [Fig.12]. On a lower side of the transverse head 30, denoted by 34, transversal sliding coupling guides are fixed in the form of recirculating ball slides 35, as shown in Figs. 14 and 15, which are a partial schematic perspective view of the transverse head 30 showing a single pair of knives and a bottom plan view of the transverse head 30.

A left-knife holder slide 40 and a right-knife holder slide 41 are equipped at the top with sliding means cooperating with the transverse sliding coupling guides. The sliding means are represented as prismatic sections, generically indicated as 42, engaging with the recirculating ball slides 35. It should be understood that other sliding coupling means can also be provided between the transverse head 30 and the left and right knife holder slides 40, 41.

Figs. 12 and 13 show left knives and right knives, indicated respectively with 43 and 44; they constitute a plurality of pairs of knives adapted to simultaneously cut a plurality of avocados A on each fruit-holding flight 22.

For descriptive simplicity indicated in Figs. 14 and 15 is a single pair of knives 430, 440, according to a variant, as will be seen below. The knives 430, 440 are fixed respectively to the left-knife holder slide 40 and to the right-knife holder slide 41.

Actuation means are provided which are able to simultaneously move the left-knife holder slide 40 and the right-knife holder slide 41 to allow a coplanar translational movement of approaching and moving away of the left knife 43 or 430 and of the right knife 44 or 440 of each pair of knives with respect to the pit N of each avocado A.

The means for actuating the knife holder slides comprise a brushless motor 7 positioned on a support bracket 70, integral with the transverse head 30. A reducer 71 is connected to the brushless motor 7 and is equipped with a motor shaft 72. A lever 73 is mounted centrally on the drive shaft 72 and, as shown in Figs. 13 and 15, has a left end 74 and a right end 75. A left tie rod 76 is adapted to connect the left end 74 of the lever 73 to the left-knife holder slide 40, and a right tie rod 77 is able to connect the right end 75 of the lever 73 to the right-knife holder slide 41. The tie rods are connected to the slides by means of an articulated head 78.

The pairs of left knives 43 or 430 and right knives 44 or 440 are able to move towards and away from the avocado pit N to simultaneously cut a plurality of avocados that are on the fruit-holding flight 22 below the pairs of knives left and right. They are moved towards and away from each other by the brushless motor 7.

The pit beating device, already known from PCT/IB2019/056468, is now reported. As shown in the figures, a plurality of punches, generally indicated as 8, in the form of rods, are fixed to a mobile crosspiece 80. The mobile crosspiece 80 moves on second vertical guides 86 by means of tracks 81 perpendicular to a pair of perforated fixed crosspieces 82, 83 of the longitudinal frame 1. The punches pass through corresponding holes in the fixed perforated crosspieces 82, 83 also functioning as guides. The displacement of the mobile crosspiece 80 occurs by means of a connecting rod-crank mechanism 84 operated by a brushless motor 85 mounted on the cover element 32. Thanks to the displacement of the mobile crosspiece 80, all the punches 8 fixed to it move simultaneously, in order to beat the pit N of the avocados A positioned in the underlying fruit-holding flight 22 and move it inside the avocado A in order to detach it from the pulp P.

The connecting rod-crank mechanism 84 has an oscillating operation with a maximum crank angle depending on the caliber of the avocados being processed. The consequent stroke of the punches 8 is controlled by means of a programmable logic controller or PLC which manages the brushless motor 85 which operates the connecting rod-crank mechanism 84. The adjustment of the stroke of the punches is carried out by means of a touchscreen (not shown) and therefore can be performed quickly according to the size of the fruit, in particular their height, to which the position and size of the pit generally correspond.

Reference is made now to Figs. 23 to 25 which are a front view, an internal side view and an end view of the left knife 43 in the transverse head 30 shown in Figs. 9, 10 and 11. The right knife, which is mirror identical to the left one, is not shown in Figs. 23 to 25.

The right and left knives 43, 44 have an end portion 400, equipped with two through holes 45, 46 for their fastening by means of bolts to the left and right knife holder slides 40, 41. The right and left knives 43, 44, also have a blade 47 having a longitudinal axis y, a rear edge 48, a free end provided with a cutting edge 49 perpendicular to the longitudinal axis y of the blade 47 and an internal side 490 equipped with a cutting edge 491 parallel to the axis longitudinal y of the blade 47. The inner side 490 of the blade 47 has an indentation 492 intended to partially surround the pit N of the avocado A and a corresponding cutting edge 493. The indentation 492 has a crescent shape. However, it generally has the shape of the profile of pit N which can be different depending on the avocado production to be treated.

A variant of a left knife, shown in Figs. 26 and 27, respectively in front and internal side views, has the same reference numbers as the above described knives. Furthermore, the left knife 430 has a hammer 495 coplanar to the blade and inclined by a determined alpha angle with respect to a straight line perpendicular to the longitudinal axis of the blade.

The variant of the right knife, shown in Figs. 26 and 27, respectively in front and internal side views, has the same reference numbers as the above described knives. The hammer 495 has an alpha angle of inclination opposite to the hammer 494 of the left knife 430. In this way, the avocado pit N is beaten in opposite diametrical points so as to give the pit N a twist and facilitate its detachment from the pulp of avocado A.

As illustrated in detail below, a first part of the cut takes place during the lowering of the blades and is performed from the free end with the cutting edge 49 perpendicular to the longitudinal axis y of the knife and its blade 47. The width of the blades is preferably 30 mm. The second part of the cut takes place through the horizontal movement of the blades with reciprocal approach, by means of their internal side 490, with the cutting edge 491 parallel to the longitudinal axis y of the blade 47, and the cutting edge 493 of the recess 492 able to partially surround the avocado pit N. Therefore, the compression of the fruit due to the vertical lowering of the blades is limited compared to the previous technique, and the pulp of the fruit undergoes less deformation. The horizontal cut does not cause any deformation on the external surface of the fruit which is still protected by the epicarp.

The cutting and pitting operation will be more understandable from the description that follows with reference to Figs. 16 to 22 which are partially sectioned schematic side views of the transverse head in [Fig.12], showing successive cutting steps of avocado.

The vertical approach of the pairs of knives 43, 44 to the avocados A positioned in the underlying fruit-holding flight (not shown) takes place starting from the position represented in [Fig.16], by lowering the head 30 along the first vertical guides 31 in virtue of the stepping device 4 and relative levers. In such a way, the blades 47 of each pair of knives fit into the diametrical spaces 51 of the recesses 5 in which the avocados A are located. The final position in the vertical approach of the blades 47 with respect to the avocado A is shown in [Fig.17].

[Fig.18] shows the final position of a horizontal translation step of the blades 47 which brings the reciprocal approach of the blades 47 around the same pit N up to the position shown in [Fig.18]. This occurs thanks to the actuation means that use brushless motor 7 and are able to simultaneously move the left-knife holder slide 40 and the right-knife holder slide 41. In particular, the brushless motor 7, through the shaft 72 of the reducer 71, rotates the lever 73 in a direction of an angle of about 20° and then moves the slides 40 and 41 by means of the left tie rod 76 and right tie rod 77.

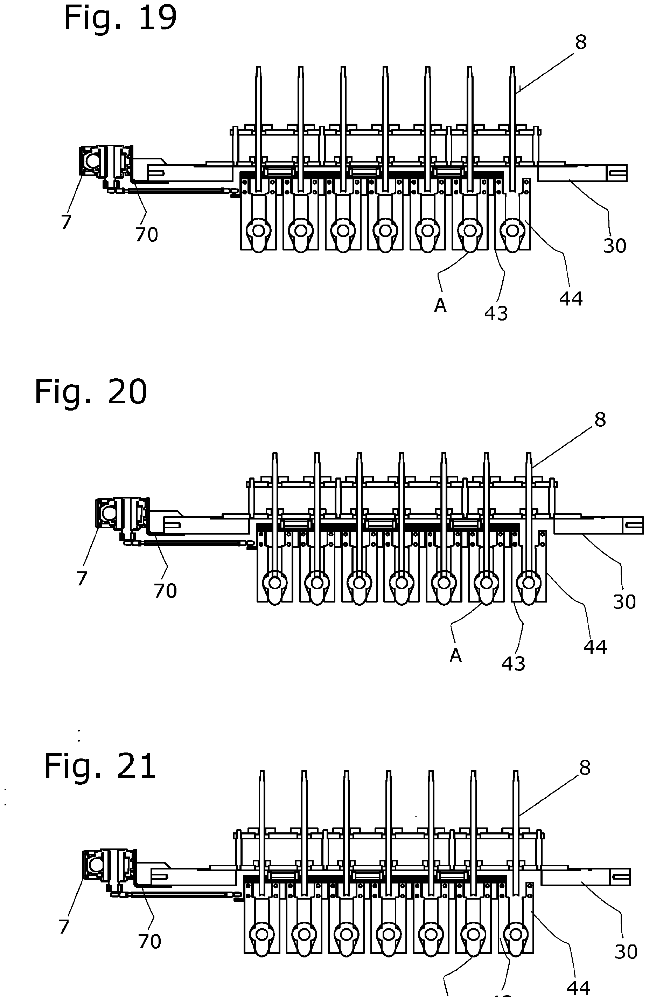

Subsequently, [Fig.19] shows the final position of a horizontal translation step of the blades 47 which causes the blades 47 to move away from each other from the pit N. This always occurs thanks to the actuation means as explained above, by means of a rotation of the lever 73 of the angle of about 20° in the opposite direction to the previous one.

[Fig.20] shows a lowering step of the punches 8 for beating the pits N by the brushless motor 85, as described above, while in [Fig.21] the punches 8 are shown in their raised position with respect to the pits N, already represented in [Fig.19].

Finally, there is the vertical distancing step of the pairs of blades 47 with respect to the cut and pitted avocados which ends as shown in [Fig.22].

The operation just described keeps the avocado pulp intact, still protected by its robust epicarp. However, the pulp is separated from the pit and the division into two parts of the avocado allows a subsequent easy detachment of the pit from them following its beating. It is therefore easy to separate the avocado into two halves and to separate the pit from the pulp.

It should be understood that the invention achieves the intended purposes and improves the process and the machine described in PCT/IB2019/056468.

The crushing of the fruit due to the compression caused by the vertical lowering of the blades is reduced, resulting in less deformation of the pulp.

The improvement is mainly given by the horizontal cutting step of the pair of knives which completes the vertical cutting step. The vertical cut represents a first full-height incision of the avocado; in the horizontal cutting step, the blades with their facing recesses approach the avocado pit, until they come into contact with it. In this way, the whole pulp is perfectly divided into two parts with a pair of coplanar blades with horizontal movement, instead of with an upper blade and a lower blade, also coplanar but with only vertical movement as provided in PCT/IB2019/056468. The shape and size of the blades of the knives used, which differ according to the caliber of the avocados to be treated, are important to achieve the purpose.

## Claims

1. An avocado cutting and pitting process, including:
- stages of feeding, orienting and advancing along several lines of avocado (A) on fruit-holding flights (22) equipped with recesses (5) with diametrical slots (51),
- a cutting stage in which each avocado (A) is divided into two halves by means of a pair of knives (43, 44; 430, 440) with facing blades (47), and
- a pitting stage in which the avocado pit (N) is beaten by means of a plunger (8) to be slightly moved inside the avocado (A) and detached from the pulp (P),
**characterized in that** the cutting and pitting stages include:
- a vertical approach step of the pairs of knives (43, 44; 430, 440) to the fruit-holding flights (22) so that the blades (47) of each pair are inserted in opposite sides of the avocado and in said diametrical slots (51) of the recesses (5) in which the avocados are placed (A),
- a horizontal translation step of the pairs of knives (43, 44; 430, 440) so that the blades (47) approach each other around the same pit (N),
- a horizontal translation step of the pairs of knives (43, 44; 430, 440) so that the blades (47) move away from each other with respect to the pit (N),
- a lowering step of the plungers (8) for beating the pits (N),
- a lifting step of the plungers (8) with respect to the pits (N), and
- a vertical removal step of the pairs of knives (43, 44; 430, 440) with respect to the avocados (A) cut and pitted on the fruit-holding flights (22).

2. A multi-lane machine comprising:
- a longitudinal frame (1),
- a conveyor (2) having fruit-holding flights (22) that are connected, at each end thereof, to links (21) of a chain advancing along the longitudinal frame (1), the fruit-holding flights (22) being equipped with a series of recesses (5) that are opened at the bottom and transversely spaced, sized according to the caliber of the avocados (A) to be transported,
- a cutting and pitting station (3), comprising
- a transversal head (30) movable vertically with respect to the fruit-holding flights (22) above them, on first vertical guides (31) perpendicular to the longitudinal frame (1) above the conveyor (2), the transverse head (30) having a lower side (34);
- a plurality of pairs of knives (43, 44; 430, 440) for each fruit-holding flight (22), in the transverse head (30) above the respective recesses (5) for cutting avocados (A),
- a cover element (32),
- a plurality of plungers (8) in the form of rods fixed to a movable crosspiece (80) by means of a connecting rod-crank mechanism (84) driven by a brushless motor (85) mounted on the cover element (32), to strike the pit (N) and to move it inside the avocado (A) in order to detach it from the pulp (P),
**characterized in that** the cutting and pitting station (3) also includes:
- transversal sliding coupling guides, located in the lower side (34) of the transversal head (30);
- a left knife holder slide (40) and a right knife holder slide (41), equipped at the top with sliding means cooperating with said transversal sliding coupling guides;
- left knives (43; 430) and right knives (44; 440) forming a plurality of pairs of knives suitable for simultaneously cutting a plurality of avocados (A) on each fruit-holding flight (22); and
- drive means able to simultaneously move the left knife holder slide (40) and the right knife holder slide (41) to allow a coplanar translational movement of approaching and moving away of the left knife (43; 430) and the right knife (44; 440) of each pair of knives with respect to said pit (N).

3. The multi-lane machine according to claim 2, wherein said transversal sliding coupling guides are recirculating ball slides (35).

4. The multi-lane machine according to claim 3, wherein said sliding means cooperating with said transversal sliding coupling guides are prismatic sections (42) engaging said recirculating ball slides (35).

5. The multi-lane machine according to claim 2, wherein said drive means comprises, on the transverse head (30):
- a brushless motor (7),
- a reducer (71) connected to the brushless motor (7) and equipped with a motor shaft (72);
- a lever (73) mounted centrally on said drive shaft (72) and having a left end (74) and a right end (75); and
- a left tie rod (76) able to connect the left end (74) of the lever (73) to the left knife holder slide (40), and a right tie rod (77) able to connect the right end (75) of the lever (73) to the right knife holder slide (41).

6. The multi-lane machine according to claim 2, in which each fruit-holding flight (22) comprises a tray (23) that is equipped with a bottom (26), end flaps (24) suitable for being fixed on the links (21), and lateral edges (25) which extend at right angles to the tray bottom (26), holes for fixing by friction the cells being made in the tray bottom (26).

7. The multi-lane machine according to claim 6, in which each recess (5) of the series of recesses (5) is made with two half cups (50) specularly equal and spaced apart by a diametrical slot (51), each half cup (50) having an upper side (52) and a lower side (53), an external lateral profile (54) in contact with the lateral edges (25) of the tray (23), and an internal lateral profile (55) comprising a semi-frustoconical shape (56) which differs according to the caliber of the avocado being processed.

8. The multi-lane machine according to claim 7, wherein the semi-frustoconical shape (56) of the internal lateral profile (55) of each half cup (50) extends downward beyond the lower side (53) of the half cup (50).

9. The multi-lane machine according to claim 6, wherein the lower side (53) of each half cup (50) has at least two pins (58) adapted to be pressed into corresponding holes made in the tray bottom (26) so as to retain by friction each half cup (50) in the fruit holding flight (22).

10. The multi-lane machine according to claim 6, in which each half cup (50) has through holes and at least two bolts are able to fit into corresponding holes made in the tray bottom (26) so as to retain each half cup (50) in the fruit holding flight (22).

11. The multi-lane machine according to claim 2, wherein the left knives (43; 430) and the right knives (44; 440) have:
- an end portion (40), provided with at least two holes (45, 46) for their attachment by bolts to the knife holder slides (40, 41), and
- a blade (47) having a longitudinal axis (y), a free end provided with a cutting edge (49) perpendicular to the longitudinal axis (y) of the blade (47) and an internal side (490) equipped with a cutting edge (491) parallel to the longitudinal axis (y) of the blade (47), the internal side (490) of the blade (47) having an indentation (492) and a corresponding cutting edge (493);
the indentation (492) having a geometric shape conjugated to the profile of the pit (N), variable according to the caliber of the avocado (A), and being designed to partially surround the pit (N) of the avocado (A).

12. The multi-lane machine according to claim 11, in which the indentation (492) has on the cutting edge (493) a hammer (494) with axis coplanar to the blade (47) and inclined at a determined angle with respect to the longitudinal axis (y) of the blade, the hammer (494) having an opposite angle of inclination in the left (430) and right (440) knife, so as to hit the pit (N) of the avocado (A) and give the pit a twist and facilitate the detachment of the pit (N) from the avocado pulp (P).

## Patentansprüche

1. Verfahren zum Schneiden und Entkernen von Avocados, einschließlich:
- Stufen des Zuführens, Orientierens und Vorrückens entlang mehrerer Linien von Avocados (A) auf Frucht haltenden Stollen (22), die mit Aussparungen (5) mit diametralen Schlitzen (51) ausgestattet sind,
- eine Schneidestufe, in der jede Avocado (A) mittels eines Paars von Messern (43, 44; 430, 440) mit einander zugewandten Klingen (47) in zwei Hälften geteilt wird, und
- eine Entkernungsstufe, in der der Avocadokern (N) mittels eines Kolbens (8) geschlagen wird, um leicht in das Innere der Avocado (A) bewegt zu werden und um sich vom Fruchtfleisch (P) zu lösen,
**dadurch gekennzeichnet, dass** die Schneide- und Entkernungsstufen beinhalten:
- einen Schritt der vertikalen Annäherung der Messerpaare (43, 44; 430, 440) an die die Frucht haltenden Stollen (22), so dass die Klingen (47) jedes Paares in gegenüberliegenden Seiten der Avocado und in die diametralen Schlitze (51) der Aussparungen (5), in die die Avocados gelegt werden, eingeführt werden (A),
- einen Schritt der horizontalen Verschiebung der Messerpaare (43, 44; 430, 440), sodass sich die Klingen (47) um denselben kern (N) herum einander annähern,
- einen Schritt der horizontalen Verschiebung der Messerpaare (43, 44; 430, 440), sodass sich die Klingen (47) in Bezug auf den Kern (N) voneinander webbewegen,
- eine Absenkstufe der Kolben (8) zum Schlagen der Kerne (N),
- einen Hebeschritt der Kolben (8) in Bezug auf die Kerne (N), und
- einen Schritt der vertikalen Entfernung der Messerpaare (43, 44; 430, 440) in Bezug auf die Avocados (A), die auf den die Frucht haltenden Stollen (22) geschnitten und entkernt werden.

2. Mehrspurige Maschine, umfassend:
- einen Längsrahmen (1),
- einen Förderer (2), der Frucht haltenden Stollen (22) aufweist, die an jedem ihrer Enden mit Gliedern (21) einer Kette verbunden sind, die sich entlang des Längsrahmens (1) fortbewegt, wobei die Frucht haltenden Stollen (22) mit einer Reihe von Aussparungen (5) ausgestattet sind, die am Boden geöffnet und in Querrichtung beabstandet sind und entsprechend dem Kaliber der zu transportierenden Avocados (A) bemessen sind,
- eine Schneid- und Entkernungsstation (3), umfassend
- einen Querkopf (30), der auf ersten vertikalen Führungen (31), die senkrecht zum Längsrahmen (1) oberhalb des Förderers (2) verlaufen, vertikal in Bezug auf die darüber befindlichen Frucht haltenden Stollen (22) beweglich ist, wobei der Querkopf (30) eine Unterseite (34) aufweist;
- eine Vielzahl von Messerpaaren (43, 44; 430, 440) für jeden Frucht haltenden Stollen (22) im Querkopf (30) über den jeweiligen Aussparungen (5) zum Schneiden von Avocados (A),
- ein Abdeckelement (32),
- eine Vielzahl von Kolben (8) in Form von Stangen, die an einem beweglichen Querträger (80) mittels eines Pleuel-Kurbel-Mechanismus (84) befestigt sind, der von einem bürstenlosen Motor (85) angetrieben wird, der auf dem Abdeckelement (32) montiert ist, um auf den Kern (N) anzuschlagen und ihn im Inneren der Avocado (A) zu bewegen, um ihn vom Fruchtfleisch (P) zu lösen,
**dadurch gekennzeichnet, dass** die Schneid- und Entkernungsstation (3) auch Folgendes beinhaltet:
- Quergleitkupplungsführungen, die sich in der Unterseite (34) des Querkopfs (30) befinden;
- einen linken Messerhalterwagen (40) und einen rechten Messerhalterwagen (41), die oben mit Gleitmitteln ausgestattet sind, die mit den Quergleitkupplungsführungen zusammenwirken;
- linke Messer (43; 430) und rechte Messer (44; 440), die eine Vielzahl von Messerpaaren bilden, die zum gleichzeitigen Schneiden einer Vielzahl von Avocados (A) auf jedem die Frucht haltenden Stollen (22) geeignet sind; und
- Antriebsmittel, die in der Lage sind, gleichzeitig den linken Messerhalterwagen (40) und den rechten Messerhalterwagen (41) zu bewegen, um eine koplanare Translationsbewegung des Annäherns und Wegbewegens des linken Messers (43; 430) und des rechten Messers (44; 440) jedes Messerpaars in Bezug auf den Kern (N) zu ermöglichen.

3. Mehrspurige Maschine nach Anspruch 2, wobei es sich bei den Quergleitkupplungsführungen um Kugelumlaufwagen (35) handelt.

4. Mehrspurige Maschine nach Anspruch 3, wobei die mit den Quergleitkupplungsführungen zusammenwirkenden Gleitmittel prismatische Abschnitte (42) sind, die mit den Kugelumlaufwagen (35) in Eingriff stehen.

5. Mehrspurige Maschine nach Anspruch 2, wobei das Antriebsmittel am Querkopf (30) umfasst:
- einen bürstenlosen Motor (7),
- ein Untersetzungsgetriebe (71), das mit dem bürstenlosen Motor (7) verbunden und mit einer Motorwelle (72) ausgestattet ist;
- einen Hebel (73), der mittig auf der Antriebswelle (72) montiert ist und ein linkes Ende (74) und ein rechtes Ende (75) aufweist; und
- eine linke Zugstange (76), die das linke Ende (74) des Hebels (73) mit dem linken Messerhalterwagen (40) verbinden kann, und eine rechte Zugstange (77), die das rechte Ende (75) des Hebels (73) mit dem rechten Messerhalterwagen (41) verbinden kann.

6. Mehrspurige Maschine nach Anspruch 2, wobei jeder Frucht haltende Stollen (22) eine Ablage (23) umfasst, die mit einem Boden (26), Endklappen (24), die zum Befestigen an den Gliedern (21) geeignet sind, und Seitenkanten (25) ausgestattet ist, die sich rechtwinklig zum Ablageboden (26) erstrecken, wobei Löcher zum Befestigen der Zellen durch Reibung im Ablageboden (26) ausgebildet sind.

7. Mehrspurige Maschine nach Anspruch 6, wobei jede Aussparung (5) der Reihe von Aussparungen (5) mit zwei spiegelbildlich gleichen und durch einen diametralen Schlitz (51) beabstandeten Halbschalen (50) ausgeführt ist, wobei jede Halbschale (50) eine Oberseite (52) und eine Unterseite (53) aufweist, ein äußeres Seitenprofil (54), das mit den Seitenkanten (25) der Ablage (23) in Kontakt steht, und ein inneres Seitenprofil (55), das eine halbkegelstumpfförmige Form (56) aufweist, die je nach dem Kaliber der zu verarbeitenden Avocado unterschiedlich ist.

8. Mehrspurige Maschine nach Anspruch 7, wobei sich die halbkegelstumpfförmige Form (56) des inneren Seitenprofils (55) jeder Halbschale (50) nach unten über die Unterseite (53) der Halbschale (50) hinaus erstreckt.

9. Mehrspurige Maschine nach Anspruch 6, wobei die Unterseite (53) jeder Halbschale (50) mindestens zwei Stifte (58) aufweist, die dazu ausgelegt sind, in entsprechende Löcher gedrückt zu werden, die in dem Ablageboden (26) ausgebildet sind, um durch Reibung jede Halbschale (50) in dem die Frucht haltenden Stollen (22) zu halten.

10. Mehrspurige Maschine nach Anspruch 6, wobei jede Halbschale (50) Durchgangslöcher aufweist und mindestens zwei Bolzen in der Lage sind, in entsprechende Löcher zu passen, die in dem Ablageboden (26) ausgebildet sind, um jede Halbschale (50) in dem die Frucht haltenden Stollen (22) zu halten.

11. Mehrspurige Maschine nach Anspruch 2, wobei die linken Messer (43; 430) und die rechten Messer (44; 440) aufweisen:
- einen Endabschnitt (40), der mit mindestens zwei Löchern (45, 46) für deren Anbringung durch Bolzen an den Messerhalterwagen (40, 41) versehen ist, und
- eine Klinge (47) mit einer Längsachse (y), einem freien Ende, das mit einer Schneidkante (49) senkrecht zur Längsachse (y) der Klinge (47) versehen ist, und einer Innenseite (490), die mit einer Schneidkante (491) parallel zur Längsachse (y) der Klinge (47) ausgestattet ist, wobei die Innenseite (490) der Klinge (47) eine Einkerbung (492) und eine entsprechende Schneidkante (493) aufweist;
wobei die Einkerbung (492) eine dem Profil des Kerns (N) angepasste geometrische Form aufweist, die je nach Kaliber der Avocado (A) variabel ist, und dazu bestimmt ist, den Kern (N) der Avocado (A) teilweise zu umgeben.

12. Mehrspurige Maschine nach Anspruch 11, wobei die Einkerbung (492) an der Schneidkante (493) einen Hammer (494) mit einer zur Klinge (47) koplanaren und in einem bestimmten Winkel zur Längsachse (y) der Klinge geneigten Achse aufweist, wobei der Hammer (494) einen entgegengesetzten Neigungswinkel im linken (430) und rechten (440) Messer aufweist, um auf den Kern (N) der Avocado (A) zu treffen und den Kern zu wenden und das Ablösen des Kerns (N) von dem Avocadofruchtfleisch (P) zu erleichtern.

## Revendications

1. Processus de coupe et de dénoyautage des avocats, incluant :
- étapes d'alimentation, d'orientation et d'avancement le long de plusieurs lignes d'avocats (A) sur des palettes porte-fruits (22) équipées d'évidements (5) à fentes diamétrales (51),
- une étape de coupe au cours de laquelle chaque avocat (A) est divisé en deux moitiés au moyen d'une paire de couteaux (43, 44 ; 430, 440) à lames affrontées (47), et
- une étape de dénoyautage au cours de laquelle le noyau de l'avocat (N) est battu au moyen d'un plongeur (8) pour être légèrement déplacé à l'intérieur de l'avocat (A) et détaché de la pulpe (P),
**caractérisé par le fait que** les étapes de coupe et de dénoyautage incluent :
- une étape d'approche verticale des paires de couteaux (43, 44 ; 430, 440) vers les palettes porte-fruits (22) afin que les lames (47) de chaque paire soient insérées dans les côtés opposés de l'avocat et dans lesdites fentes diamétrales (51) des évidements (5) dans lesquels les avocats sont placés (A),
- une étape de translation horizontale des paires de couteaux (43, 44 ; 430, 440) de manière à ce que les lames (47) se rapprochent l'une de l'autre autour de la même fosse (N),
- une étape de translation horizontale des paires de couteaux (43, 44 ; 430, 440) de sorte que les lames (47) s'éloignent l'une de l'autre par rapport à la fosse (N),
- une étape d'abaissement des plongeurs (8) pour battre les fosses (N),
- une étape de levage des plongeurs (8) par rapport aux fosses (N), et
- une étape de retrait vertical des paires de couteaux (43, 44 ; 430, 440) par rapport aux avocats (A) coupés et dénoyautés sur les palettes porte-fruits (22).

2. Machine à plusieurs voies comprenant :
- un cadre longitudinal (1),
- un convoyeur (2) comportant des palettes porte-fruits (22) reliées, à chacune de leurs extrémités, aux maillons (21) d'une chaîne avançant le long du cadre longitudinal (1), les palettes porte-fruits (22) étant équipées d'une série d'évidements (5) ouverts à la base et espacés transversalement, dimensionnés en fonction du calibre des avocats (A) à transporter,
- un poste de coupe et de dénoyautage (3), comprenant
- une tête transversale (30) mobile verticalement par rapport aux palettes porte-fruits (22) situées au-dessus d'elles, sur des premiers guides verticaux (31) perpendiculaires au cadre longitudinal (1) situé au-dessus du convoyeur (2), la tête transversale (30) ayant une face inférieure (34);
- plusieurs paires de couteaux (43, 44 ; 430, 440) pour chaque palette porte-fruits (22), dans la tête transversale (30) au-dessus des évidements respectifs (5) pour couper les avocats (A),
- un élément de couverture (32),
- une pluralité de plongeurs (8) sous forme de tiges fixées à une traverse mobile (80) au moyen d'un mécanisme bielle-manivelle (84) entraîné par un moteur sans balais (85) monté sur l'élément de couverture (32), pour frapper le noyau (N) et le déplacer à l'intérieur de l'avocat (A) afin de le détacher de la pulpe (P),
**caractérisé par le fait que** le poste de coupe et de dénoyautage (3) inclut également :
- des guides d'accouplement transversaux glissants, situés dans la partie inférieure (34) de la tête transversale (30) ;
- une glissière de porte-couteau gauche (40) et une glissière de porte-couteau droit (41), équipées en haut de moyens glissants coopérant avec lesdits guides d'accouplement glissants transversal ;
- des couteaux gauches (43 ; 430) et des couteaux droits (44 ; 440) formant une pluralité de paires de couteaux aptes à couper simultanément une pluralité d'avocats (A) sur chaque palette porte-fruits (22) ; et
- des moyens d'entraînement capables de déplacer simultanément la glissière de porte-couteau gauche (40) et la glissière de porte-couteau droit (41) pour permettre un déplacement de translation coplanaire d'approche et d'éloignement du couteau gauche (43 ; 430) et du couteau droit (44 ; 440) de chaque paire de couteaux par rapport à ladite fosse (N).

3. Machine à voies multiples selon la revendication 2, dans laquelle les guides d'accouplement glissants transversaux sont des glissières à recirculation de billes (35).

4. Machine à voies multiples selon la revendication 3, dans laquelle les moyens glissants coopérant avec les guides d'accouplement glissants transversal sont des sections prismatiques (42) s'engageant dans les glissières à billes à recirculation (35).

5. Machine à voies multiples selon la revendication 2, dans laquelle ledit moyen d'entraînement comprend, sur la tête transversale (30) :
- un moteur sans balais (7),
- un réducteur (71) relié au moteur sans balais (7) et équipé d'un arbre moteur (72) ;
- un levier (73) monté au centre de l'arbre d'entraînement (72) et ayant une extrémité gauche (74) et une extrémité droite (75) ; et
- un tirant gauche (76) capable de relier l'extrémité gauche (74) du levier (73) à la glissière de porte-couteau gauche (40), et un tirant droit (77) capable de relier l'extrémité droite (75) du levier (73) à la glissière de porte-couteau droit (41).

6. Machine à voies multiples selon la revendication 2, dans laquelle chaque palette porte-fruits (22) comprend un plateau (23) qui est équipé d'un fond (26), de rabats d'extrémité (24) aptes à être fixés sur les maillons (21), et de bords latéraux (25) qui s'étendent à angle droit par rapport au fond du plateau (26), des trous pour la fixation par friction des alvéoles étant pratiqués dans le fond du plateau (26).

7. Machine à voies multiples selon la revendication 6, dans laquelle chaque cavité (5) de la série de cavités (5) est réalisée avec deux demi-coquilles (50) spéculairement égales et espacées par une fente diamétrale (51), chaque demi-coquille (50) ayant une face supérieure (52) et une face inférieure (53), un profil latéral externe (54) en contact avec les bords latéraux (25) du plateau (23), et un profil latéral interne (55) comportant une forme semi-frustoconique (56) qui diffère selon le calibre de l'avocat traité.

8. Machine à voies multiples selon la revendication 7, dans laquelle la forme semi-frustoconique (56) du profil latéral interne (55) de chaque demi-coquille (50) s'étend vers le bas au-delà du côté inférieur (53) de la demi-coquille (50).

9. Machine à voies multiples selon la revendication 6, dans laquelle le côté inférieur (53) de chaque demi-coquille (50) comporte au moins deux broches (58) adaptées pour être enfoncées dans des trous correspondants pratiqués dans le fond du plateau (26) afin de retenir par friction chaque demi-coquille (50) dans la palette de retenue des fruits (22).

10. Machine à voies multiples selon la revendication 6, dans laquelle chaque demi-coquille (50) a des trous traversants et au moins deux boulons peuvent s'insérer dans les trous correspondants faits dans le fond du plateau (26) de manière à retenir chaque demi-coquille (50) dans la palette porte-fruits (22).

11. Machine à voies multiples selon la revendication 2, dans laquelle les couteaux gauches (43 ; 430) et les couteaux droits (44 ; 440) ont :
- une partie terminale (40), pourvue d'au moins deux trous (45, 46) pour leur fixation par des boulons aux glissières de porte-couteau (40, 41), et
- une lame (47) ayant un axe longitudinal (y), une extrémité libre pourvue d'un bord tranchant (49) perpendiculaire à l'axe longitudinal (y) de la lame (47) et un côté interne (490) équipé d'un bord tranchant (491) parallèle à l'axe longitudinal (y) de la lame (47), le côté interne (490) de la lame (47) ayant une indentation (492) et un bord tranchant correspondant (493) ;
l'indentation (492) ayant une forme géométrique conjuguée au profil du noyau (N), variable selon le calibre de l'avocat (A), et destinée à entourer partiellement le noyau (N) de l'avocat (A).

12. Machine à voies multiples selon la revendication 11, dans laquelle l'indentation (492) comporte sur le tranchant (493) un marteau (494) dont l'axe est coplanaire à la lame (47) et incliné à un angle déterminé par rapport à l'axe longitudinal (y) de la lame, le marteau (494) ayant un angle d'inclinaison opposé dans le couteau gauche (430) et droit (440), de façon à frapper le noyau (N) de l'avocat (A) et à donner une torsion au noyau et à faciliter le détachement du noyau (N) de la pulpe de l'avocat (P).
